(19) Europäisches Patentamt
European Patent Office
Office européen des brevets

(11) **EP 2 014 545 B1**

(12) **EUROPEAN PATENT SPECIFICATION**

(45) Date of publication and mention
of the grant of the patent:
**27.02.2013 Bulletin 2013/09**

(51) Int Cl.:
***B62J 1/28*** *(2006.01)*

(21) Application number: **08012341.7**

(22) Date of filing: **08.07.2008**

(54) **System for transforming rectilinear motion to circular motion**

System zur Übertragung von rechteckigen Bewegungen in Kreisbewegungen

Système pour la transformation du mouvement d'une direction rectiligne en un mouvement circulaire

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **09.07.2007 IT TP20070004**

(43) Date of publication of application:
**14.01.2009 Bulletin 2009/03**

(73) Proprietor: **Cosenza, Salvatore**
**91016 Erice (TP) (IT)**

(72) Inventor: **Cosenza, Salvatore**
**91016 Erice (TP) (IT)**

(74) Representative: **Maroscia, Antonio**
**Contrà Porti, 21**
**36100 Vicenza (IT)**

(56) References cited:
**AU-A- 8 252 682     DE-C- 92 777
FR-A- 438 953        FR-A- 2 203 470
FR-A- 2 825 064      GB-A- 2 413 257
US-A- 3 661 404**

**Description**

Of the industrial invention of title: Applicative system of integral transmission of mechanical energy in transforming motion from rectilinear, with alternated inversion of direction sense which has an eventually variable angle, to circular motion with constant unique sense of rotation.-

To the Name of Salvatore Cosenza, of Italian nationally, who has principal place of business in Erice - fraz.ne Casa Santa- r.ne S. Giuliano, via Ciullo d'Alcamo n. 21.-

**PRECIOUS TECHNICAL STATE**: The mechanical transmission system which is used besides all in the bicycle, with pedal set furnished of foot cranks (or arms); and in endothermic engines with rods, crank shafts, it might be likened to a mechanical transmission system with motion transformation;

from: rectilinear motion, effecting during thrust sense (which could have constant direction, instead is varying because effected by the orbit of pedaling cycle; said direction line passes between the point of balance of the body - its fulcra - and the application point of the force its self, on the pedal, relatively to the bicycle), for half cycle of pedaling (therefore, with active phase - of foot or piston -, not continuous during the whole cycle), constituted by the synchronized motion of the two legs (or pistons) in alternated combination;

to: unique sense circular motion, continuous, constituted by the group of cranks and crowns (or either, the crank shaft).

**Crank lever**: This system is found to defect on the view point of its in complex average rendering which, in optimal conditions (where doesn't occur the condition of a particular stress or even, extreme), supposing a constant spinning during the entire cycle, as much as 50% is lost in *virtual work* because of the varying component in which the driving thrust force is decomposed, whose direction passes through the fulcra (direction toward the center and decreasing in strength during the first fourth of pedaling cycle and increasing with direction away from the center during the second), until it presents, during the phases less effective of its cycle, the so called "*dead point*" in which, independently of the thrust, its torque is equal to zero. The power developed by this traditional system, without considering the loss of friction, is given

by the formula $P_o = \dfrac{T_a * N}{716200}$ where $P_o$ is the out-

put power in horse power (HP), $T_a$ is the average torque measured in Kgmm, N is the number of revolutions per

minute RPM $\left(T_a \approx \sim \dfrac{T_{max}}{2}\; ;\right.$ $T_{max}$ is the

maximum torsion momentum, or torque, corresponding to one of the three instants of the course of pedal, in which its strength corresponds with the main thrust force, and is not one of its component - due to decomposition of main force - ; but in which, the direction of thrust is tangent to rotation of crank, with maximum arm of lever available).

**Rod and crank shaft:** Like ways to what is above explained, in the stroke engine, the energy which is constrained in *virtual work* and obstructed by the opposition of the fulcra of its crank shaft immediately after the stroke, is partially stored by the elasticity of mixed gasses of the explosion, to be released afterwards to the system throughout piston, rod and crank shaft. After two following decompositions of the main driving force: one in the transmission between piston and rod (whose - undesired component - will yield the friction between the rings against the cylinder), and the other between rod and crank shaft (whose - undesired component - will yield *virtual work*); the energy constrained into *virtual work,* due to even greater compression of mixed gasses, successively to explosion, is transformed into heat, maintaining a hotter temperature which facilitates its scattering by the way of heat dispersion. This dispersion takes place therefore, altogether to the heat yielded by all frictions, with cooling system.

**Bicycle:** In the bicycle this problem, it is even more evident when at the extreme ratio of body stress (climbing up onto a slope or against the wind), the direction of thrust gets closer to the fulcra, provoking the falling of rendering in the output power until is caused the arrest of system, when the person has yet power to keep going on foot, pushing the bicycle by hands. It is even known that gearing favorably the relation of transmission, to the aim of overcoming the "*dead point*" (in those moments, in which many times precede system halting), and getting closer to the position of major effectiveness (with the maximum torsion momentum); the gearing relation results to be to much advantageous, like ways when one puts his foot on fall, without a place to lay it drown, on a void, achieving a moving of the mean of transport, irrelevant.

To give a remedy to the problem of *dead point,* same as for the passive phases of the stroke engine, it has been searched to make recourse to:

I. Elliptical crowns (Shimano), for the gradual, positional varying of the relation of transmission, timely most advantageous during the event of dead point,

II. Devices which automatically select the best relation of transmission;

III. Curved foot cranks, with housing for a spring which gets compressed by the pedal, co-aligned in the cavity which follows its curvature In this case has been reported a gain of 15% of energy;

IV. Pedal mounted on flying wheel, in place of foot crank;

V. Exerting foot thrust by loops (same of those of a saddle) at the extremity of a cable.

VI. ELEVATED-UP/DOWN TYRE DRIVING DEVICE FOR BICYCLE (publication Number: WO/2000/044611; Int. Class.: B62M 1/04 (2006.01)).

For each one of these systems (from I to IV), there are some minor component forces produced by the decomposition of main thrust force: one which will yield the useful torsion momentum and the other, directed against the fulera, which will yield *virtual work.* The fifth (V) system (about which I have seen just a video registration, whose functioning I couldn't verify because a covering was hiding it from view) could transmit a constant torsion momentum. If it could be found more efficient compares to the others, yet couldn't be valid because the movement of the cable and therefore of the loop on its extremity, is not guided and confined to one plane, which besides that could be a fixed orientation point for the equilibrium of the user. Besides the extreme difficulty of whom is compelled to become an acrobat on the saddle, he should endorse the risk to fall by losing his balance, while his legs would be swinging out of control, in every direction; and the loop is a danger because it ensnares the foot, doesn't allow it to be instinctively released to prevent eventual fallings.

As far as the VI is concerned, which for sure doesn't have the obstacle of *dead point,* it is noted that thou transmitting portion of driving force by a cable tangent to the pulley, it presents the following inconvenients:

> a. Direction and sense of thrust force are affected into a position and a rectilinear path with the most immediate consequence of decomposition of main thrust force, and besides to bring prejudice to versatility (which should help application of bio-mechanical/anthropogenic power), doesn't allow to exploit the weight of the body (aligning its balance center) in presence of gravity, neither however, to exert any added force. The crippled, in this case, might only avail of the weight of his leg and of the force that his muscles are able to exert, in an uncomfortable way, with a thrust which doesn't originates from the centre of balance toward the pedal, but in vertical direction.
> b. The cable which transmits the remnant of driving force, goes throughout a plurality of guides (before reaching the pulley), whose friction reduces efficacy.

FR438953 discloses a bicycle having a motion transmission system having all the features of the preamble of the claim 1. However, this bicycle comprises a system for transmitting the motion from the user to the bicycle of the traditional type, i.e. designed to simply transform the rotating movement of the pedal into the rotating movement of the wheel. As a consequence, the force transmitted by the user has always a substantially radial component that doesn't work.

**AIM THAT THIS INNOVATION INTENDS TO REACH:** The problem of "*dead point*" described above, doesn't exist .for other systems of this kind already widely used. Systems like the one for transmission, from chain to posterior free wheel (case of bicycle); or from a belt, by friction, to a pulley, and also, from rack gear to pinion gear; etc.

In these systems, the driving rectilinear element exerts a force which is always tangent to the circular motion of the revolving element, inducted into motion, with the result that the main thrust is the actual/effecting force producing the torsion momentum, which will be the maximum obtainable with the same trust force. Unlikely to traditional system used on bicycle to input power, in these systems the output power, not considering the loss of frictions, is given by the most known formula

$$\frac{T \cdot N}{716200}$$ (T=Torsion momentum; N=Revolutions Per Minute). Though the wide use that has been done of these systems for a long time already in many appliances, as it has been just said, is evident that in certain cases, it has been missing the intuition on how to apply them. In the case of bicycle, winches or capstans, have been passing by centuries and thousands of years, from the first moment when were invented, until the stroke engine where the prevailing idea has been that of crank system in which is made an effort to continually sweeten (even in missing such capacity and to the detriment of bio-mechanical efficiency) the direction of applied force to the normality of torsion momentum that is produced, with a very bad result especially in the case of bicycle and of the stroke engine. In support of the creativity of this innovation, must be said that it doesn't avail its self of new scientific discovery or recent technological innovations, but presents characteristics obtainable by the same knowledge of their original inventors.

These are therefore, the aims of this innovation:

> 1) The resulting input power will be according the most common formula described for last; which is double compared to the formula for traditional system under same condition (that is: with thrust force equal up to body weight).
> 2) Conform naturally and automatically the alignment of rectilinear element which follows the direction of thrust force within the limits of a tolerable swinging angle.
> 3) Making this device functional even in absence of gravity; or however, allow the user to exert on the pedal, the maximum force that legs might be able to develop, superior to the weight of the user body. Example: a person who makes for sport weight lifting, has 100 Kg of body and is able to lift on his shoulders 320 Kg. On each leg he can support 210 Kg, while on the pedal of traditional bicycle he can exert only 100 Kg. Anybody who is able to walk, can exert on one leg some additional force to the body weight its self.
> 4) To use the device in all safety, in different way compared to the system with a loop at the end of a flying cable and (as it is already for traditional bicycles) keeping the capacity to remove the foot from the pedal (to stop one self or maybe, to prevent the user from own fall). Easy re-localization of pedal, confined on a plane of run/oscillation, to the aim of prosecution after suspension of acting pressure on the pedal.

**ANALISYS OF REACHED RESOLUTION:**

These aims are solved by the system according to independent claim 1 (which realization is possible to perform in various ways), one of the novelties that have been introduced and wish to introduce, as much as possible, in other appliances (visible on drawings - which have only demonstrative value, and are not sufficiently described in all tiny particulars for the very easy complementary task which will be performed by a technician, such as in a executive project. For this reason it has been omitted also, to represent the saddle and other particulars which are not dealing with innovation its self.) is:

**Applicative system of integral transmission** (Table A)

Furnishing the extremity of rectilinear element (which may be flexible and roll-able on the revolving element **6,** to alternatively wind up and unwind during function) of pedal **1** (abolishing the foot crank) which, when the rectilinear element **2** is not rigid as in the case of a rack gear (this might be: rope, cable, belt, chain, etc.), is rigidly mounted onto a Telescopic / Retractile Guided Bar **3**. The own choice of the flexible rectilinear element is consequent of the fact that, in starving position of course, the rigid element would be sticking out compared to the whole systems, and however, should have some guides anti-friction which should support the flexion of pedal. More over, to the aim of reaching most high efficiency, motion transmission from rectilinear element **2** to clement **6,** is not carried out by friction; but by the rigid mounting of the extremity of element **2** over element **6**. So, the row obtained on element **6,** is used only as a guide for smoothly winding the rectilinear element and not to cleave it tightly.

**Telescopic / Retractile Guided Bar 3**: Besides to supply a restraint to support the flexion that thrust force exerts on the pedal **1** function according which, usage of a pedal is made possible (especially in presence of a **not rigid rectilinear element 2**) -, follows the pedal **1** while keeping it, during the evolution of all its movements, within the context of a vertical plane. This is important because, while maintaining the freedom to push along any direction of the plane, it is possible to make this force concurrent with gravity to the varying of path inclination; allowing also, the easy re-tracking of pedal for prosecution of activity, following a suspension. The Telescopic / -Retractile Guided Bar **3** might be composed by two or three elements (their transversal section might vary from rectangular to elliptical. Etc,) inserted axially/longitudinally one inside the other, like a telescope. These elements have their own reciprocal axial, retractile movement running on bearings (or grease solving the same function), limited by guides with end of path, obtained on the same elements The bar angular/vertical motion is hinged by bearings; in relation to the bicycle, in axial correspondence with the rear wheel. It might be obtained exteriorly to the wheel hub, with mounting on the wheel axis, which will be properly longer, stretched out on the two sides; or internally to the wheel hub. In this case, the hollow of the wheel hub, will have a greater diameter to allow housing of hollow axis for the lodging the hinges of the two bars (right and left) to fit in it. ,

This system that already offers the advantage to exploit a constantly maximum, not zero value torsion momentum; might be enhanced with the second novelty that is wished to be introduced. In facts, with the increasing of opposed resistance which would cause raise of user body, it is possible to intervene with the integration o a system anti-lifting.

**Antl-lifting system (or In Absence of Gravity Working System)** (Tables A e C): The constraining cable with adjustable length **16**, ending with two snap-links **15,** passes within the curved tube **17** upon which are mounted the two wheel guides **18** with free angular orientation; so is connected to the jacket **4** by means of snap-links **15**.

The curved tube is solidly welded to the pivot **19** that allows the flipping vertically downward (about 180°). By turn, the pivot can be totally turned according to an horizontal angle, thanks to the bearings in the hollow of tube **24** and mounted on the post **26** and on the frame, with fast-on system acting by lever **25** (same to the one used for saddle and wheels). So as for the saddle, the post **26** is adjustable in height. The downward flipping of tube **17** opens the way to the user to take position on the saddle. The anchor systems adopted in the anti-lifting system (which will become tight only when one just lifts him self up from the saddle on the pedal, in the necessity to increase the own power performance), musk be adjusted by the user. Having by priority, established the comfortable length for the central one and adjusted it, will apt the lateral ones connected by the running cable **16** that compensate the distances on the two sides, during the lateral moving of the sprint, which is also followed by the horizontal angular motion of the curved tube **17** that pivots about bearings. The line between the body balance point and the thrust force application point on the pedal, should result, as much as possible, on the same plane parallel to the common plane of the rectilinear element and the groove where it is winded up on the pulley. This is facilitated by the running rope **16** (inside tube **17**) and by the horizontal angular movement of tube **17,** which have just been mentioned.

Supposing that the transmission relation be enough disadvantageous and that a sufficient resistance of path is meet; if previously (with traditional system), the maximum pressure that the user could exert on the pedal depended exclusively on the weight of his body (that is, the gravity) now, he can express a force superior to his own weight, which will be computed to the 100% of exit power.

**Exploiting kinetic energy**. This system allows exploiting of energy in kinetic form,

$$E_c = \frac{1}{2} \cdot m \cdot v^2$$

This is achieved by the user, raising up on the pedal, while striking powerfully upward, as he would aim to break those anchorages hindering him from standing up. As far as the anchorages, they must be designed with the intend of avoiding: breakage, definitive plastic deformation and containing elastic deformation. The functional analogy is that of maul, instead that the one of the press Having passed the middle point of the course of the pedal, as the applied force is reduced, is possible to alternate immediately the other foot, repeating the operation with an other strike.

**Description of revolving element (Table D)**: The revolving element (upon which the rectilinear element **2** is winded) which transmits the driving force, in the present example consists of a pulley **6** (Table A). The pulley is a *free wheel* (Arty free wheel can work out. I achieved the first realization of this invention with free wheels bought on the market; but the present design pays attention to the effects of involvement of accumulated inertia energy) whose external ring **14** (which is seen on table sectioned together with other elements making up the groove of the bearing site for running spheres), it is seized by the internal part **21** becoming as one with it. The internal part is mounted by means of the cross **20** (double on the crown side; while on the other side there is only one cross with 5 braces), on the little shaft (mounted over bearings placed in the hollow of the hub obtained on the frame). Thitherward, the transmission is carried out as in a traditional systems, in the sense of transmission of motion. The seizing of the ring is performed by a ratchet system with teeth (or by friction) realized between the surfaces of the ring (the internal surface of the ring becomes a ratchet gear) and the eccentric **22** (in a number of five, according the number of braces of the cross) with hinge **23** on the internal part **21** (constantly kept in slight contact with the gripping surface by a spring which will allow to slip during pedal return), that will exert an increasing pressure between the hinge and the same ring, till the point of being dragged into rotation, together with entire internal part. It is free on the opposite sense for the recovery of *start course* position by the pedal. The external ring of the *free wheel*, confined on the most peripheral zone of the same wheel, as for all elements whose mass undergo to a continuous motion inversion with relative loss of energy (in this case, due by inertia to *flying wheel* effect), is obtained with material with a low specific weight and reduced dimensions (just as it was said, to spare most energy as possible, which should be committed to contrast the so called "*flying wheel* effect" in the changing of motion sense). The external ring of this pulley, if it is supplied with two grooves, is to give a site to the second cable 7 (fixed by its extremity) which by the guide wheel neutral **8**, is synchronously connected to the other external ring of the other pulley symmetric on the opposite site. This cable constitutes the mechanism of pedal return, in this case; otherways, the two external rings might be connected and synchronized by a system of 3 conic pinion gears, which will constitute the mechanism of pedal return. Two of these will be obtained on the external ring its self of each pulley; while the third one will be the connecting element between them.

As far as concerns the elements constituting the running site of the spheres, on the table there are two, specifically: one **27** fixed (with screws, probably) to the external element **14,** and the other **28** to the internal part **21**. The mounting order will be: insertion of the first series of spheres along their running site of the external ring **14,** insertion of the element **28**, insertion of the second series of spheres, insertion of element **27**, fixing of the **27** over the **14,** fixing of the **28** over the **21**. The element **28,** while function goes on, will oppose by the running spheres, the pressure exerted by the eccentric on the external ring **14,** so doing the **14** will be found gripped as into a vise.

**Cables tighten system** (Table B): The cable 2 of the pedal that drives the pulley into rotation, and **cable 7** of the mechanism of pedal return (Table A), are constantly kept under slight tension, purposely adjusted. This is achieved by cable **11,** which on the rear, connects the two guided telescope bars **3** (Table A) symmetrically homologous - right and left -, The two pulleys **12** in vertical correspondence with the guided bars **3** - Table A -, function as guides for cable **11** by which tension is exerted. The central pulley **13,** adjusted by the screw **9** (and its nut), exerts the needed tension on the cable, which is made flexible by compression spring **10.**

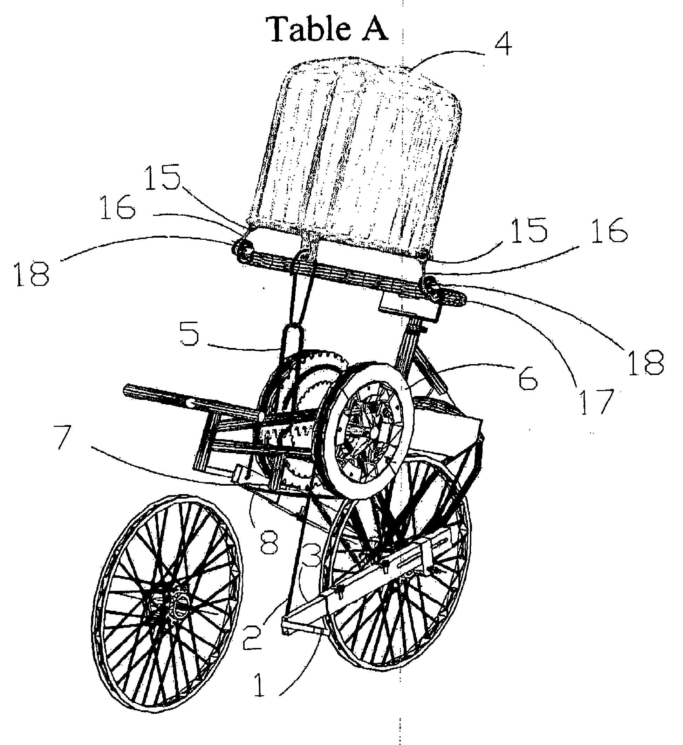

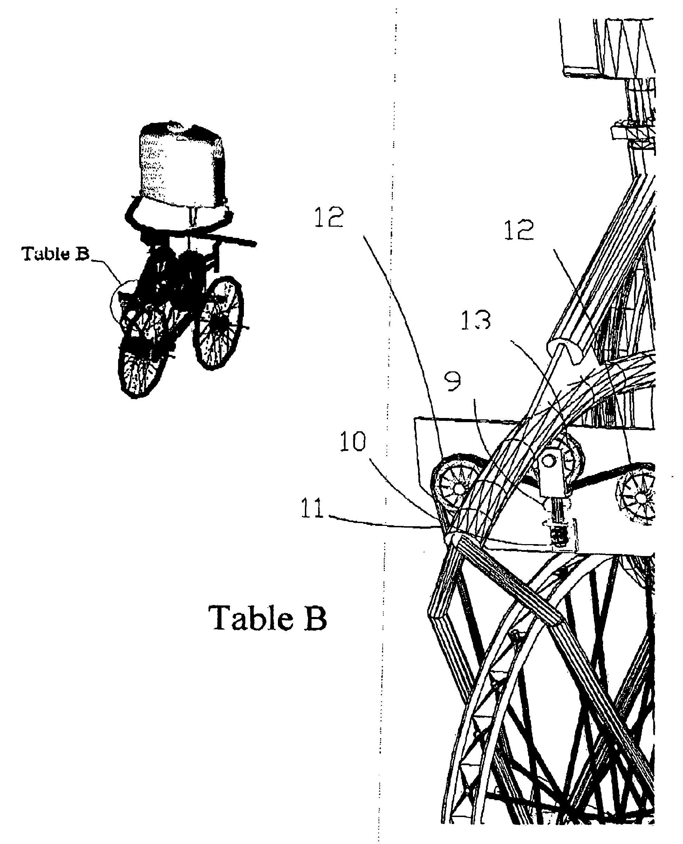

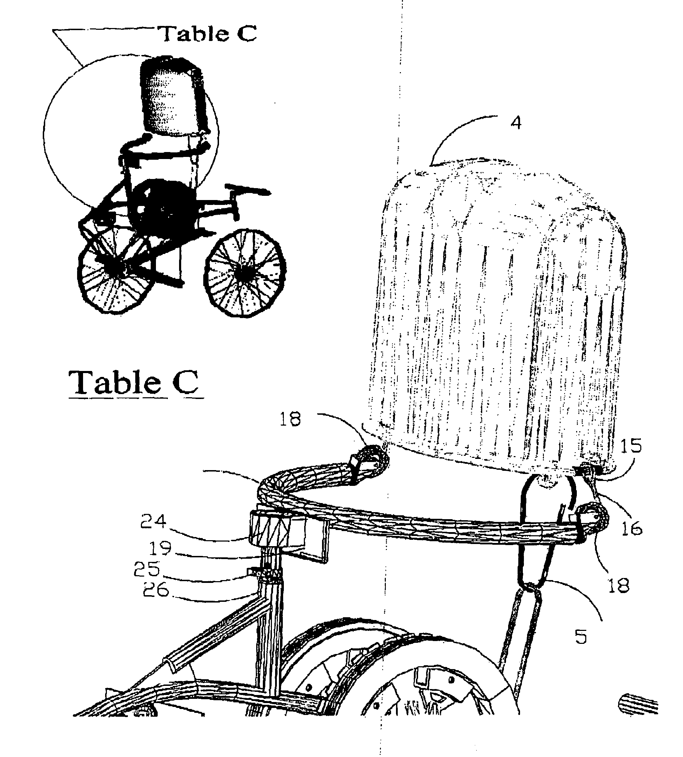

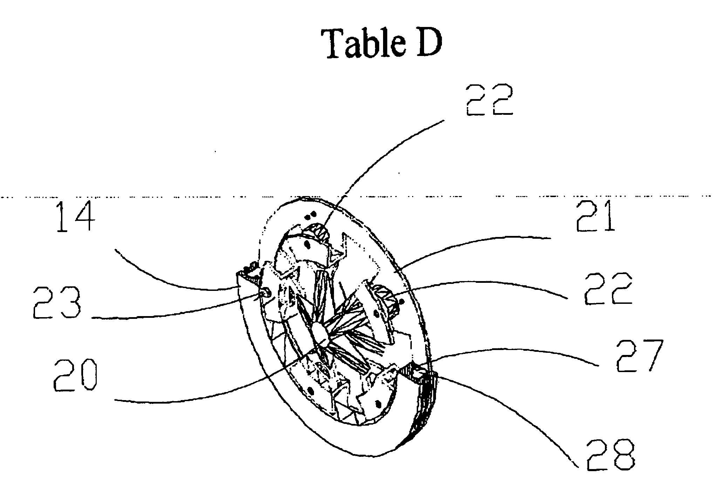

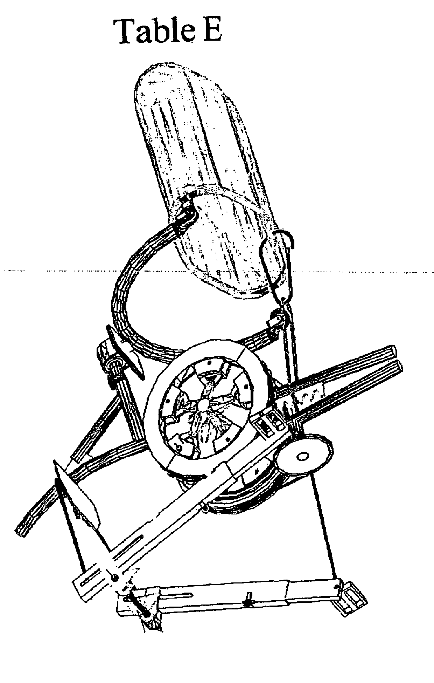

**Claims**

1. A system for transforming rectilinear motion into circular motion for wheeled vehicles having a frame, wherein the system comprises:

   - a pedal (1) designed for receiving a driving force by a user for rotating in a vertical plane;
   - a rotating element (6) connected to said pedal (1) for transmitting the driving force,
   - a flexible cable (2) wound on said rotating element (6) and always tangential thereto for transmitting the driving force from said pedal (1) to said rotating element (6) and producing the rotation thereof, said flexible cable (2) having one end fixed to said pedal (1), the other end being fixed to said rotating element (6);

   **characterized in that** a telescopic guide bar (3) is provided which is rigidly coupled to said pedal (1) and designed to be hinged to a wheel of the vehicle for angularly moving in a vertical plane, an anti-lift system being also provided having a jacket (4) wearable by a user and having anchorable system for anchoring to the frame, said anchoring system having a pivoting curved tube (17) having a hinge connection (19) to the frame for rotating into an horizontal axis, a constraining cable (16) with adjustable length passing within said tube (17) and having opposite ends connected to said jacket (4), said tube (17) having at each end thereof a wheel (18) with free angular orientation for guiding said constraining cable (16) to allow the compensation of the side distance during the oscillation movement of the user during riding and the pivoting of said tube (17).

2. System as claimed in claim 1, **characterized in that** said telescopic guide bar (3) comprises at least two sections slidingly inserted one into the other and a bearing for hinging said guide bar (3) to said frame.

3. System as claimed in claim 2, **characterized in that** said constraining cable (16) is provided at its ends with snap links (15) for its connection to said jacket (4).

4. System as claimed in claim 3, **characterized in that** said hinge (19) of said curved tube (17) has a lever system (25) for its quick mounting to the frame.

5. System as claimed in claim 1, **characterized in that** said rotating element (6) is a pulley having a groove for said flexible cable (2), this latter being co-planar with said pulley (6).

6. System as claimed in claim 5, **characterized by** comprising a return mechanism for said pedal, said mechanism comprising a second pulley symmetrical with respect to said rotating element (6) and vertically corresponding with a second guide bar (3), said rotating element (6) having a second groove for housing a second cable (7) fixed to said second pulley, an idle guide wheel (8) being also provided for connecting said rotating element (6) whit said second pulley.

7. System as claimed in claim 6, **characterized by** comprising tightening means of said flexible cable (2) and said second cable (7) for constantly keeping them tensioned.

8. System as claimed in claim 7, **characterized in that** said tightening means comprise a tensioning cable (11) connecting said guide bars (3) and a central pulley (13) for exerting a tension on said tensioning cable (11), said tightening means also comprising a compression spring (9) acting on said central pulley (13).

**Patentansprüche**

1. System zum Umwandeln einer geradlinigen Bewegung in eine Kreisbewegung für mit Rädern versehene Fahrzeuge mit einem Rahmen, wobei das System Folgendes aufweist:

ein Pedal (1), welches ausgelegt ist, um eine Antriebskraft von einem Anwender aufzunehmen, um sich in einer vertikalen Ebene zu drehen;
ein sich drehendes Element (6), welches mit dem Pedal (1) verbunden ist, um die Antriebskraft zu übertragen,
ein flexibles Kabel (2), welches auf das sich drehende Element (6) gewickelt ist und immer tangential dazu ist, um die Antriebskraft von dem Pedal (1) auf das sich drehende Element (6) zu übertragen und um eine Drehung davon zu erzeugen, wobei das flexible Kabel (2) ein Ende aufweist, welches an dem Pedal (1) befestigt ist, wobei das andere Ende an dem sich drehenden Element (6) befestigt ist;
**dadurch gekennzeichnet, dass** eine Teleskopführungsstange (3) vorgesehen ist, welche starr mit dem Pedal (1) gekoppelt ist und ausgelegt ist, um scharnierartig mit einem Rad des Fahrzeugs verbunden zu werden, und zwar zur Winkelbewegung in einer vertikalen Ebene, wobei weiter ein Anti-Hubsystem vorgesehen ist, welches eine Jacke (4) aufweist, die ein Anwender tragen kann, und welches ein Verankerungssystem zur Verankerung am Rahmen besitzt, wobei das Verankerungssystem ein gekrümmtes Schwenkrohr (17) mit einer Scharnierverbindung (19) zum Rahmen hat, und zwar zur Drehung in einer horizontalen Achse, weiter ein Einschränkungskabel (16) mit einstellbarer Länge, welches innerhalb des Rohrs (17) verläuft und entgegengesetzte Enden hat, die mit der Jacke (4) verbunden sind, wobei das Rohr (17) an jedem seiner Enden ein Rad (18) mit einer freien Winkelorientierung hat, um das Einschränkungskabel (16) zu führen, um die Kompensation der Seitendistanz während der Oszillationsbewegung des Anwenders während des Fahrens und des Schwenkens des Rohrs (17) zu gestatten.

2. System nach Anspruch 1, **dadurch gekennzeichnet, dass** die Teleskopführungsstange (3) zumindest zwei Abschnitte aufweist, die gleitend ineinander eingesetzt sind, und ein Lager zur scharnierartigen Verbindung der Führungsstange (3) mit dem Rahmen.

3. System nach Anspruch 2, **dadurch gekennzeichnet, dass** das Einschränkungskabel (16) an seinen Enden mit Schnappverbindungen (15) für seine Verbindung mit der Jacke (4) versehen ist.

**4.** System nach Anspruch 3, **dadurch gekennzeichnet, dass** das Scharnier (19) des gekrümmten Rohrs (17) ein Hebelsystem (25) für eine schnelle Montage am Rahmen hat.

**5.** System nach Anspruch 1, **dadurch gekennzeichnet, dass** das sich drehende Element (6) eine Umlenkscheibe mit einer Nut für das flexible Kabel (2) ist, wobei Letzteres koplanar zu der Umlenkscheibe (6) ist.

**6.** System nach Anspruch 5, **dadurch gekennzeichnet, dass** es einen Rückholmechanismus für das Pedal aufweist, wobei der Mechanismus eine zweite Umlenkscheibe aufweist, die symmetrisch bezüglich des sich drehenden Elementes (6) ist und vertikal entsprechend zu einer zweiten Führungsstange (3) ist, wobei das sich drehende Element (6) eine zweite Nut zum Aufnehmen eines zweiten Kabels (7) hat, welches an der zweiten Umlenkscheibe befestigt ist, weiter ein Laufführungsrad (8), welches ebenfalls zur Verbindung des sich drehenden Elementes (6) mit der zweiten Umlenkscheibe vorgesehen ist.

**7.** System nach Anspruch 6, **dadurch gekennzeichnet, dass** es Befestigungsmittel des flexiblen Kabels (2) und des zweiten Kabels (7) aufweist, um diese konstant gespannt zu halten.

**8.** System nach Anspruch 7, **dadurch gekennzeichnet, dass** die Befestigungsmittel ein Spannkabel (11) aufweisen, welches die Führungsstangen (3) und eine mittige Umlenkscheibe (13) verbindet, um eine Spannung auf das Spannkabel (11) auszuüben, wobei die Befestigungsmittel auch eine Druckfeder (9) aufweisen, die auf die mittige Umlenkscheibe (13) wirkt.

## Revendications

**1.** Un système de transformation de mouvement rectiligne en mouvement circulaire pour un véhicule à roues ayant un châssis, le système comprenant :

- une pédale (1) conçue pour recevoir une force d'entraînement de la part d'un utilisateur pour tourner dans un plan vertical ;
- un élément rotatif (6) relié à ladite pédale (1) pour transmettre la force d'entraînement,
- un câble flexible (2) enroulé sur ledit élément rotatif (6) et constamment tangentielle à celui-ci pour transmettre la force d'entraînement de ladite pédale (1) audit élément rotatif (6) et pour produire la rotation de celui-ci, ledit câble flexible (2) comportant une extrémité fixée à ladite pédale (1), l'autre extrémité étant fixée à l'élément rotatif (6) ;

**caractérisé en ce qu**'une barre de guidage télescopique (3) est prévue, laquelle est rigidement couplée à ladite pédale (1) et destinée à être articulée à une roue du véhicule pour se déplacer angulairement dans un plan vertical, un système anti-relevage étant également prévu ayant une enveloppe (4) pouvant être portée par un utilisateur et ayant un système d'ancrage pour être ancré au bâti, ledit système d'ancrage comportant un tube de pivotement incurvé (17) ayant une liaison articulée (19) sur le châssis pour tourner dans un axe horizontal, un câble de contrainte (16) de longueur réglable qui passe à l'intérieur dudit tube (17) et ayant des extrémités opposées reliées à ladite enveloppe (4), ledit tube (17) ayant à chaque extrémité une roue (18) avec une orientation angulaire libre pour guider ledit câble de contrainte (16) pour permettre la compensation de la distance latérale pendant le mouvement d'oscillation de l'utilisateur pendant le déplacement et le pivotement dudit tube (17).

**2.** Système selon la revendication 1, **caractérisé en ce que** ladite barre de guidage télescopique (3) comprend au moins deux sections insérées de façon coulissante l'une dans l'autre et un palier pour articuler ledit barre de guidage (3) sur ledit châssis.

**3.** Système selon la revendication 2, **caractérisé en ce que** ledit câble de contrainte (16) est pourvu à ses extrémités de mousquetons (15) pour son raccordement à ladite enveloppe (4).

**4.** Système selon la revendication 3, **caractérisé en ce que** ladite liaison articulée (19) dudit tube incurvé (17) présente un système de levier (25) pour sa fixation rapide sur le châssis.

**5.** Système selon la revendication 1, **caractérisé en ce que** ledit élément rotatif (6) est une poulie ayant une gorge pour le câble souple (2), ce dernier étant coplanaire avec ladite poulie (6).

**6.** Système selon la revendication 5, **caractérisé en ce qu'**il comprend un mécanisme de rappel pour ladite pédale, ledit mécanisme comprenant une seconde poulie symétrique par rapport audit élément rotatif (6) et correspondant verticalement avec une seconde barre de guidage (3), ledit élément rotatif (6) ayant une deuxième gorge pour loger un deuxième câble (7) fixé à ladite seconde poulie, une roue de guidage de ralenti (8) étant également prévue pour relier ledit élément rotatif (6) avec ladite deuxième poulie.

**7.** Système selon la revendication 6, **caractérisé en ce qu'**il comprend des moyens de serrage dudit câble flexible (2) et dudit second câble (7) pour les maintenir constamment tendus entre eux.

**8.** Système selon la revendication 7, **caractérisé en ce que** lesdits moyens de serrage comprennent un câble tendeur (11) reliant lesdites barres de guidage (3) et une poulie centrale (13) pour exercer une tension sur ledit câble de tension (11), ledit moyen de serrage comprenant également un ressort de compression (9) agissant sur ladite poulie centrale (13).

# Table A

Table B

12    12

13

9

10

11

Table B

Table C

Table C

# Table D

Table E

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2000044611 A

- FR 438953